# EUROPEAN PATENT SPECIFICATION

(11) **EP 0 880 693 B1**
(45) Date of publication and mention of the grant of the patent: **09.07.2003**
(21) Application number: 97903256.2
(22) Date of filing: 10.02.1997
(51) Int. Cl.: G01N 27/447

(54) **USE OF MULTIPLE GRADIENTS IN ELECTROPHORESIS IN GEL SLABS AND IN CAPILLARIES**
VERWENDUNG VON MULTIGRADIENTEN IN GELPLATTEN UND KAPILLAREN IN DER ELEKTROPHORESE
UTILISATION DE GRADIENTS MULTIPLES EN ELECTROPHORESES DANS DES PLAQUES DE GEL ET DANS DES CAPILLAIRES

(30) Priority: 13.02.1996 IT MI960263
(43) Date of publication of application: 02.12.1998
(73) Proprietor: RIGHETTI, Pier Giorgio, 20129 Milano (IT); Gelfi, Cecilia, 20052 Monza (IT)
(72) Inventor: RIGHETTI, Pier Giorgio, 20129 Milano (IT); Gelfi, Cecilia, 20052 Monza (IT)
(74) Representative: Bianchetti, Giuseppe, Prof.
(86) International application number: EP9700622
(87) International publication number: WO97030346

(56) References cited:
- WO-A-89/02930
- US-A- 5 047 134
- US-A- 5 190 629
- CLINICAL CHEMISTRY, vol. 33, no. 5, 1987, pages 653-657, XP000673377 P. SORROCHE: "SERUM ALKALINE PHOSPHATASE ISOENZYMES IN HEPATOBILIARY DISORDERS RESOLVED BY USE OF IMMOBILISED PH GRADIENTS"
- NUCLEIC ACIDS RESEARCH, vol. 19, no. 7, 1991, pages 1475-1481, XP000673378 M. BURMEISTER: "IDENTIFICATION OF POLYMORPHISMS BY GENOMIC DENATURATING GRADIENT GEL ELECTROPHORESIS: APPLICATION TO THE PROXIMAL REGION OF HUMAN CHROMOSOME 21"

## Description

The present invention refers to the use of multiple gradients (of chemical denaturants, of thermal denaturants and of porosity of the electrophoretic matrix) for the separation of PCR-amplified, DNA fragments, both normal or containing point mutations, by gel slab zone electrophoresis or by capillary electrophoresis in presence of viscous polymer solutions (either linear or branched). The method is applicable too to the analysis of mutations in proteins and to the optimization of, e.g., chiral separations in capillaries. Included in the present invention is the use of binary gradients (e.g. chemical and porosity gradients) or the simultaneous use of the 3 gradients (chemical, thermal and of porosity) in case of point mutations having a high melting point. The present invention also extends to the use of batteries of capillaries, in the case of capillary electrophoresis, for the simultaneous analysis of multiple samples. It also includes the detection of such DNA fragments (or of proteins and other suitable analytes) by laser-induced fluorescence. The invention extends also to the use of mixed polymer solutions (e.g., polyacrylamides and celluloses of different chain length), in case of capillary electrophoresis, and with polyacrylamides made of monomers resistant to hydrolysis (typically N-substituted, such as N,N'-dimethyl acrylamide, N-acryloyl amino propanol).

The detection of single base differences (point mutations) in specific regions of human genomic DNA is of fundamental importance in analysis of mutations associated with human diseases. In the analysis of inherited genetic diseases and for mass screening of genes, it is necessary to detect, in an electrophoretic separation, single or multiple point mutations of DNA. Up to the present, the most popular method has been the one of Fischer and Lerman (*Proc. Natl. Acad. Sci USA* 80, 1983, 1579-1583), consisting in an electrophoretic separation in a gel slab in presence of a gradient of chemical denaturant (usually urea and/or formamide) (denaturing gradient gel electrophoresis, DGGE). This method is based on the fact that the mobility of a partially melted DNA molecule is markedly reduced as compared to that of the same DNA existing as an intact double helix. The sequences which can be separated are typically made of two domains, having a low and a high melting point, respectively. This permits, within a narrow interval of denaturant concentration, to obtain fusion intermediates containing both partially unwound and intact double helixes. When a mixture of such molecules, having the same length in total number of bases, but differing by a single point mutation, migrate in a gel in presence of a gradient of denaturant, different equilibria between native and partially melted molecules occur, so that such molecules will be separable during the electrophoretic run. Generally, the partially melted molecule will migrate more slowly as compared to the native molecule, since the radius of gyration of the former is greater than that of the latter, so that the frictional resistance to migration will be greater for the partially melted species. As typically utilized, the DGGE method consist in mixing normal and mutant DNA chains and in forming a mixed population of "homo-" and "hetero-" double helixes by heating the sample above the melting point (of all chains), followed by gentle cooling. The hetero-duplexes have in general lower melting points than the homo-duplexes, since in the former mismatches of some bases in the region of the mutation occur. As a consequence, when such mixtures of homo- and hetero-duplexes are migrated in a gradient of denaturant, they can be separated into distinct peaks due to their different melting points. In general, if the normal (wild-type, Wt) and mutant (M) chains are melted and reannealed, one should expect, for statistical reasons, the formation of four types of double helixes: two homo-duplexes (Wt/Wt and M/M) and two hetero-duplexes (Wt/M and M/Wt). It is precisely on the separation and detection of this spectrum of four bands, along the migration path in a denaturing gradient, that relies the diagnosis on the presence of a point mutation in an exon amplified from a patient under analysis. A fundamental variant of the method of Fischer and Lerman, in which only chemical denaturants are used (e.g., urea, formamide), is the method of thermal denaturants, just as effective in the case of nucleic acids. In this last method (called TGGE, thermal gradient gel electrophoresis, Riesner, Henco and Steger, Advan. *Electr.* 4, 1991, 171-250) a temperature gradient (e.g., from 30 to 90°C) is applied to the extremity of a gel slab, either perpendicular or parallel to the direction of migration. In a variant of this method, such temperature gradient is created inside a capillary, not in the space of the capillary, but in time (temperature programmed capillary electrophoresis, Gelfi, Righetti, Cremonesi and Ferrari, *Electrophoresis* 15, 1994, 1506-1511).

Today, the two most common analytical methods for screening for point mutations are DGGE and TGGE. However both methods suffer from several defects, which often hamper a precise diagnosis. First of all, since the various DNA, which are amplified from different exons, have different structures and widely different melting points (Tm), which can cover an ample interval of denaturant concentrations, it is quite difficult to find experimental conditions (duration of electrophoresis and slope of the gradient of denaturant) which can be adapted to any type of mutation. Thus, for different types of mutations, one has to find proper electrophoretic conditions, which goes against routine applications of the method. In addition, since the electrophoretic time needed for separating the two homo-duplexes is often substantially longer than that of the two hetero-duplexes, the latter often produce bands so diffused along the electrophoretic track as to escape detection by the common fluorescent intercalating dyes (e.g., ethidium bromide). When the characteristic spectrum of four bands cannot be detected, the analysis looses its diagnostic value.

The object of the present invention is the use of a DGGE (or a TGGE) gradient combined with a co-linear gradient of porosity in the sieving matrix (in general, but not exclusively, polyacrylamide), for separating DNA fragments, normal or bearing point mutations, in electrokinetic methodologies. While the first gradient is used for denaturing, in a temporal sequence, the two homo and hetero-duplexes, thus producing the characteristic spectrum of four bands, the second gradient (of porosity) is needed for re-compacting the diffused bands (both of homo and hetero-duplexes) so as to drastically reduce the theoretical plate height of each zone and thus produce very tight bands, well visible with specific stains and by densitometry. Additionally, since the second gradient (of porosity) drastically reduces the migration of the various DNAs (which decelerate asymptotically to the "pore limit", where migration will eventually cease), the method contemplated in the present invention allows adopting standard migration times for any type of DNA mutant, thus allowing a routine application of both DGGE and TGGE. Additionally, the present invention allows also the application of such binary gradients of porosity and of chemical (and/or thermal) denaturants in capillary electrophoresis. Is part of the present invention also the use of viscous polymer solutions (either linear or branched), which exert sieving of such nucleic acids on the basis of the radius of gyration of native or partially unwound molecules, and the possibility of using batteries of capillaries, for multiple, simultaneous analyses, as well as the possibility of revealing such nucleic acid zones by laser-induced fluorescence. Is part of the present invention also the simultaneous use of more than one gradient of denaturants, e.g. a combination of chemical (urea and/or formamide) and thermal denaturants, coupled to the use of porosity gradients. Such combined use of denaturants allows applying temperatures (either in a gel slab format or in capillary) well below the boiling temperature of the solvent (typically, but not exclusively, an aqueous solvent).

The advantages of denaturing gradients, combined with porosity gradients, according to the present invention, over the standard gradients utilized so far (*i.e.* in the absence of porosity gradients) are illustrated below.

### Separation of DNA point mutants in polyacrylamide gel slabs

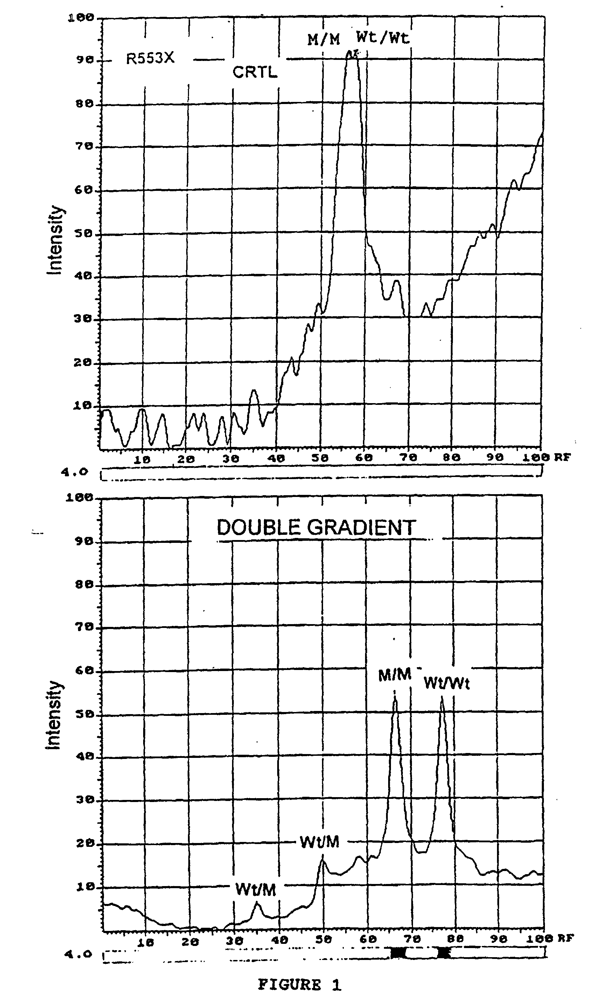

Fig. 1 shows the separation of DNA fragments (cystic fibrosis gene, CFTR, exon 11) amplified from a normal individual (Wt) and a patient carrying a point mutation (R553X, 1789 C->T) in presence of either a single (upper panel) or a double (lower panel) gradient. In the upper panel, separation is carried out in a constant concentration gel (6.5%T, where T=total monomer concentration) and in presence of a denaturing gradient, from 10 to 60% (urea or formamide). In the lower panel, the separation is still carried out in the same denaturing gradient (10-60%), coupled, however, to a second gradient, co-linear with the first one, of matrix porosity. This porosity gradient is obtained by varying the total monomer content in the matrix (%T), in the interval 6.5-12%T. Both gradients are oriented along the migration axis, so that the lower part of the gradient (having a low content in chemical denaturant and a low % of monomers) is situated at the sample deposition site (at the cathodic side), whereas the high part of the gradient is located at the anodic gel side. In both cases (single and double gradients) the gel slabs are impregnated with the same running buffer (40 mM Tris, 20 mM NaOH, 1 mM EDTA, pH 7.6; TEA buffer). Both gel slabs have the following dimensions: 0.75 mm thickness, 15 cm width and 15 cm length. In the case of the single gradient, the electrophoretic run had a duration of 5 hours at 160 V; in the case of the double gradient, electrophoresis was continued for 15 hours at 75 V. At the end of the run, both gels are stained with ethidium bromide and photographed under UV light. The two panels represent densitometric scans of both gels. As shown in the upper panel, the densitometric profile cannot reveal the two hetero-duplexes (which cannot be distinguished even by visual gel inspection after staining) and can barely detect a doublet, representing the two homo-duplexes (Wt/Wt and M/M), poorly resolved at the apexes. In this case no precise diagnosis could be given. Conversely, in the case of the gel containing a double gradient (lower panel) the spectrum of four peaks, characterizing the presence of a point mutation, is clearly visible (Wt/M, M/Wt and M/M, Wt/Wt), allowing for an univocal diagnosis. It should be noted, additionally, that, whereas in the second case the base line of the tracing is low and constant, in the case of the single gradient gel the base-line is wavy and highly irregular, hampering peak attribution.

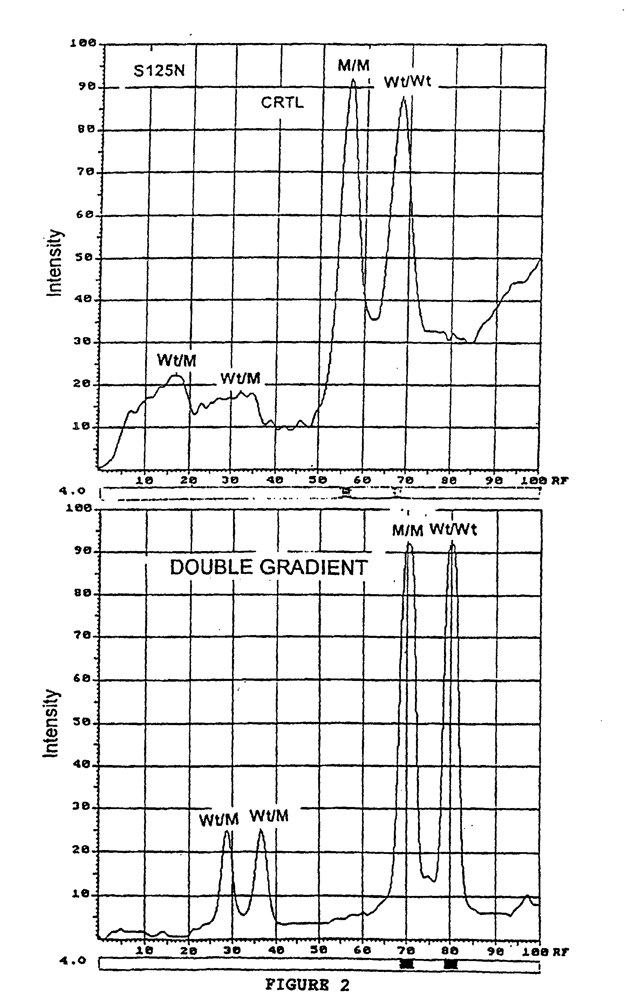

Fig. 2 shows the analysis of another point mutant in the CFTR gene (exon 20, known as S125N, 3384 G->A) analyzed just as in the previous example in presence of a single (upper panel) or a double (lower panel) gradient with the difference that, since the mutation has a higher Tm, the gels contain a steeper denaturing gradient, from 20 to 70%. In this case the single-gradient gel resolves well the two homo-duplexes (M/M and Wt/Wt) but gives no clear clue as to the presence of the two hetero-duplexes, which tentatively are assigned to the two "blobs" marked Wt/M and M/Wt. Here too the marked waviness of the baseline does not allow a clear identification of minor peaks. Conversely, the gel containing the double gradient, due to its intrinsic ability of re-compacting diffuse bands, resolves and clearly identifies all the spectrum of four bands (lower panel) allowing a precise diagnosis. Also in this case the base-line of flat and constant.

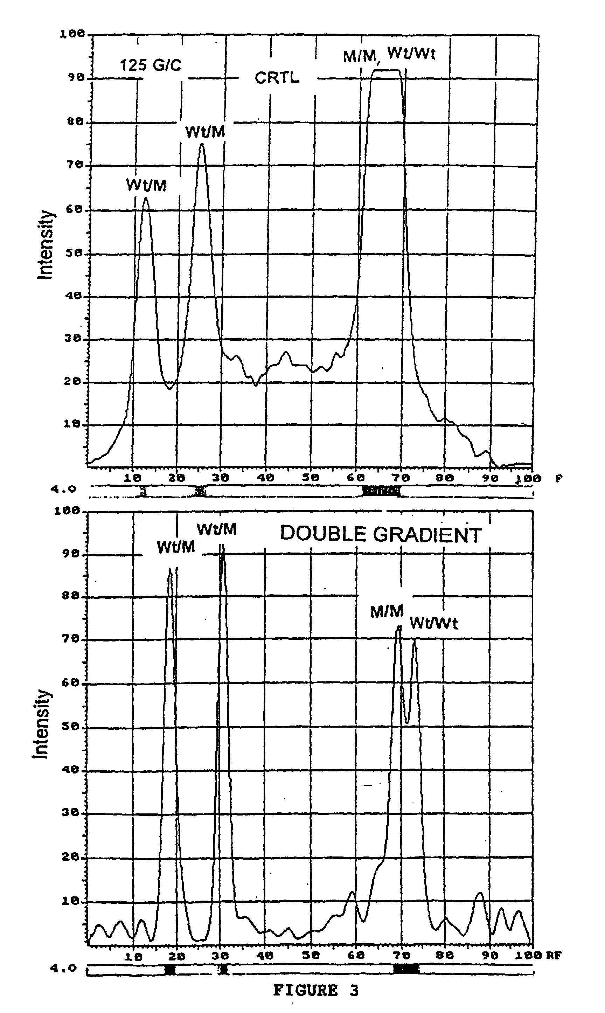

Fig. 3 shows the analysis of another point mutant in the CFTR gene (exon 1, known as 125G/C) analyzed just as in the example of Fig. 1 in presence of a single (upper panel) or a double (lower panel) gradient with the difference that, in both cases, since the mutation has an even higher Tm, the denaturing gradient utilized spans a 40 to 90% concentration range. In this case the control (upper panel) shows a good resolution of the two hetero-duplexes (Wt/T and M/Wt) but a single peak in the zone of the two homo-duplexes, which probably have rather similar Tm's. On the contrary, the gel containing a double gradient shows an excellent separation of the two hetero-duplexes and also a good separation of the two homo-duplexes, although not to the base-line.

### Separation of DNA point mutants in capillary electrophoresis

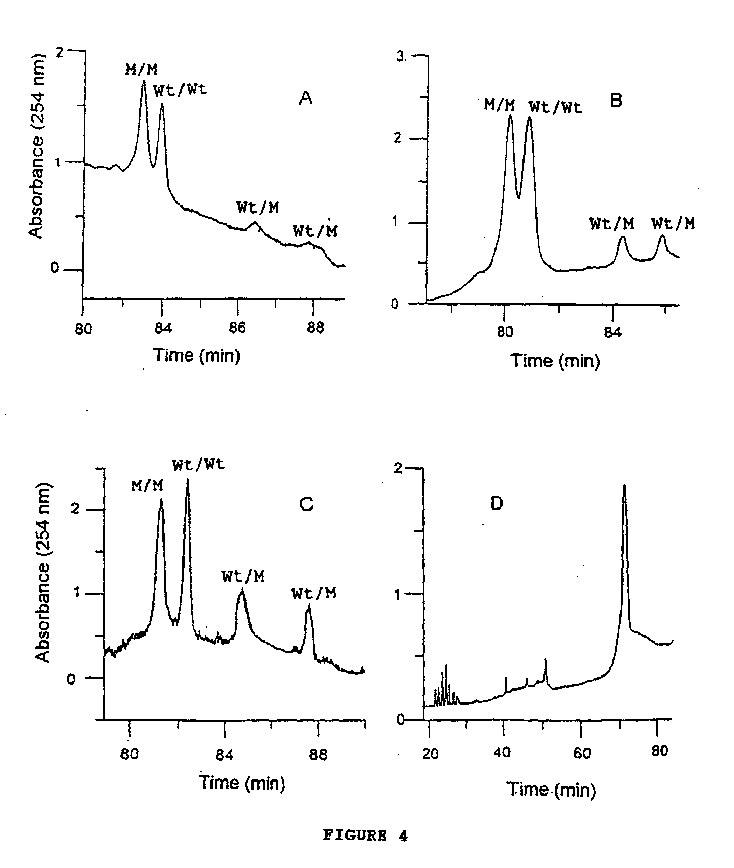

The above method has been also adapted to capillary electrophoresis (CZE), with markedly improved results as compared to the single gradient approach. Up to the present, it has not been possible to create gradients of chemicals, due to the very small volume of the liquids to be mixed (of the order of a few microliters). With micromanipulation techniques it has been possible to fill such capillaries with gradients of both, chemical denaturants and of porosity. Fig 4 shows the results of such analysis. The fused silica capillary has first been chemically treated so as to abolish the electroendoosmotic flow, by anchoring to the inner wall a polymer of poly(N-acryloyl amino ethoxy ethanol), possessing high hydrophilicity and highly resistant to alkaline hydrolysis. In the control, the capillary is filled with a buffer solution (TBE: 8.9 mM Tris, 8.9 mM borate, 1 mM EDTA, 6 M urea, 10 mM NaCl, pH 8.3) in presence of a constant concentration of acrylamido monomers (e.g., 6%T). which are then polymerized in situ. Acrylamide can also be polymerized in the absence of cross-linker, thus forming a viscous polymer solution, which also exerts good sieving on the DNA analytes. In the case of the double gradient, the capillary is filled (by repeated, sequential injection of a series of solutions with step-wise concentrations plateaus, as demonstrated below) with the same buffer solution, but containing a gradient of monomer concentration (e.g., 6-8% or 6-10%). In regard to Fig. 4, the second gradient (of denaturant), in both cases, is a thermal gradient, which covers the temperature interval from 56 to 58°C, covering the Tm values of the various homo- and hetero-duplexes (exon 11 of the CFTR gene, mutation known as 17171G->A). When using a thermal gradient as denaturant in CZE, the buffer is added also with 10 mM NaCl, which favours the denaturation of DNA and helps creating a thermal gradient via a joule effect (the temporal thermal gradient is activated during the run via voltage ramps, as described by Gelfi et al., Electrophoresis 15, 1994, 1506-1511). DNA band detection is performed *in situ*, along the capillary path, via intrinsic UV absorbance of DNA at 260 nm. Fig. 4, panel D, shows a control run, in the absence of both thermal and porosity gradients. In the absence of a denaturing gradient, there is no partial unwinding of the double helixes and the only peak eluted (at 80 min) represents an envelope of the four bands of homo- and hetero-duplexes. Panel A shows an analysis in presence of a single gradient (thermal denaturant, from 56 to 58°C). The two homo-duplexes are well separated, but here too the two hetero-duplexes give very diffuse zones, which tentatively have been labelled as Wt/M and M/Wt. In panel B the same analysis has ben repeated, but in presence also fo a porosity gradient from 6 to 8%T. The two hetero-duplexes are now well visible and can be easily identified. Finally, in panel C, the same analysis has been repeated in presence of a steeper porosity gradient (from 6 to 10%T). It can be appreciated now that also the two homo-duplexes are base-line resolved.

### Creation of chemical and/or porosity gradients in a capillary

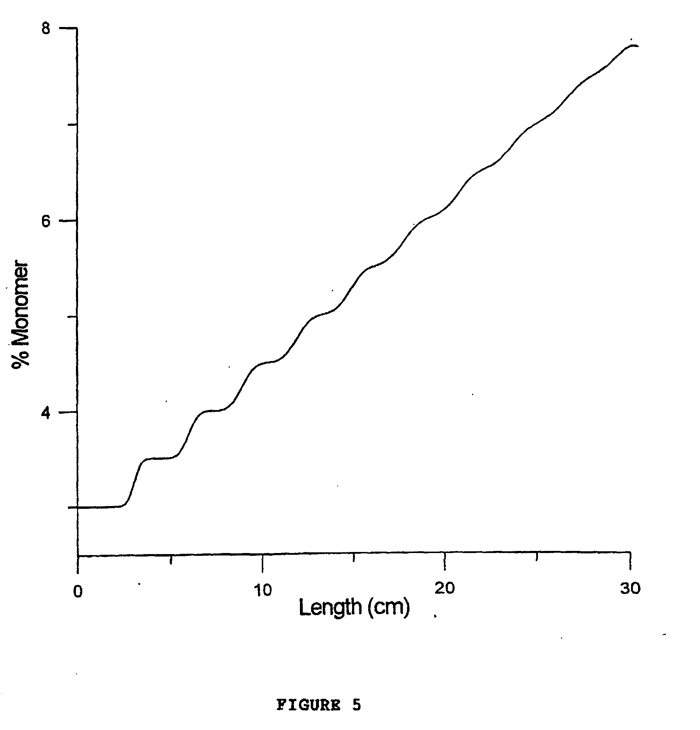

Such gradients could be created with the aid of micromanipulating devices, comprising computer-driven microsyringes and a micro-mixing chamber. An even simpler approach is here described. A series of solutions, containing step concentrations of the desired porosity (or chemical denaturant, or both) gradient is prepared. These solutions are placed sequentially in the sample carousel of a capillary electrophoresis unit (e.g., Beckman P/ACE 5100, Bio Rad Bio Focus 2000 etc.) and injected sequentially in the capillary (a typical injection pressure being 0.5 psi, *i.e.* 3448.4 Pa). If one injects solutions containing varying concentrations of chemicals in a step-wise mode, one would expect that the concentration profile in the capillary is step-wise too. However parabolic flow profiles arising in the capillary during pressure injection act as additional dispersion factors, reducing concentration nonuniformities, particularly in the regions of the large gradients. These region are the ones between the adjacent stairs in which one concentration plateau is followed by the other. This process is well known and is based on the theory of dispersion in capillaries, as developed by Taylor (*Proc. R. Soc. London, Ser. A,* 219, 1953, 186-200). The question remains of how many step concentrations should be injected in order to obtain a reasonably smooth gradient. This has been studied in capillaries having a total length of 37 cm (30 cm to the detector) and with 100 æm inner diameter. The final results are shown in Fig. 5, which shows the concentration profile obtained by injecting sequentially 11 solutions covering an acrylamide concentration interval from 3 to 8% (at increments of 0.5%) and extending over 33 cm of the capillary length (thus, covering the useful separation axis, just past the detector window). It is seen that, except from some wavy pattern close to the injection point, the concentration gradient is remarkably smooth, especially in the region towards the detection point, *i.e.* the most important part of the separation capillary. Thus, it appears that, as a golden rule, each concentration plateau, when injected, should occupy a total capillary length of ca. 3 cm, in order to obtain a reasonably smooth gradient.

In some different aspects, the present invention also relates to the use of coupled (or multiple) gradients in gel slabs or capillaries for all electrokinetic separations requiring non-isocratic conditions.

The teaching of the present invention is also applicable to the use of porosity gradients coupled to a gradient of a denaturant (either chemical or thermal) or combined triple gradients for analysis of mutations in proteins, of dissociation into subunits, of conformational transitions, both in gel-slab format and in capillaries and to the use of any of the above gradients (thermal, chemical, of porosity, either singly or combined) for optimizing chiral separations in capillary electrophoresis.

## Claims

1. Method for separation and identification of fragments of genomic DNA in electrophoretic methodologies either in gel slabs or in capillaries, **characterised by** the use of a porosity gradient coupled to a gradient in the concentration of a chemical denaturant or coupled to a gradient of a thermal denaturant.

2. A method according to claim 1, performed on slabs of sieving gels selected from the group consisting of polyacrylamides, modified agaroses, celluloses, cellulose derivatives and corresponding physical mixtures or crosslinked polymers.

3. A method according to claims 1-2, **characterised by** the fact that the porosity gradient is constituted by viscous solutions of linear or branched polymers.

4. A method according to claims 1-3, **characterised by** the fact that the porosity gradient is formed by hydrolysis-resistant polyacrylamides, either as homopolymers or as co-polymers of different monomers.

5. A method according to claim 4, **characterised by** the fact that the polyacrylamides are selected from in the group consisting of poly(N,N-dimethyl acrylamide), poly(N-acryloylamino ethoxy ethanol), poly(N-acryloyl amino propanol), poly(N-acryloyl amino butanol) and corresponding co-polymers and their mixtures.

6. A method according to claim 1, for the separation and identification of point mutations of human genomic DNA.

7. A method according to claim 1 for electrokinetic separations requiring non-isocratic conditions.

8. A method according to claim 1 for analysis of mutations in proteins, of dissociation into subunits, of conformational transitions, both in gel-slab format and in capillaries.

9. A method according to claim 1 for optimising chiral separations in capillary electrophoresis.

## Patentansprüche

1. Verfahren zur Abtrennung und Identifikation von Fragmenten von genomischer DNA in elektrophoretischen Methodiken entweder in Gelslabs oder in Kapilarien, **gekennzeichnet durch** die Verwendung eines Porositätsgradienten, gekoppelt mit einem Konzentrationsgradienten eines chemischen Denaturanten oder gekoppelt mit einem Gradienten eines thermischen Denaturanten.

2. Verfahren nach Anspruch 1, ausgeführt auf Slabs von Siebgels, ausgewählt aus der Gruppe, bestehend aus Polyacrylamiden, modifizierten Agarosen, Zellulosen, Zellulosederivaten und entsprechenden physikalischen Gemischen oder vernetzten Polymeren.

3. Verfahren nach den Ansprüchen 1 und 2, **dadurch gekennzeichnet, dass** der Porositätsgradient durch Viskoselösungen von linearen oder verzweigten Polymeren gebildet ist.

4. Verfahren nach den Ansprüchen 1 bis 3, **dadurch gekennzeichnet, dass** der Porositätsgradient durch hydrolysebeständige Polyacrylamide entweder als Homopolymere oder als Copolymere von verschiedenen Monomeren gebildet ist.

5. Verfahren nach Anspruch 4, **dadurch gekennzeichnet, dass** die Polyacrylamide ausgewählt sind aus der Gruppe, bestehend aus Poly (N, N-dimethylacrylamid), Poly (N-acryloylaminethoxyethanol), Poly (N-acryloylaminopropanol), Poly (N-acryloylaminobutanol) und entsprechende Copolymere und deren Gemische.

6. Verfahren nach Anspruch 1 für die Abtrennung und die Identifikation von Punktmutationen von menschlicher genomischer DNA.

7. Verfahren nach Anspruch 1 für elektrokinetische Abtrennungen, die nichtisokratische Bedingungen erfordern.

8. Verfahren nach Anspruch 1 für die Analyse von Mutationen in Proteinen, von einer Aufspaltung in Untereinheiten, von Conformationsübergängen, beide in einem Gelslab-Format und in Kapillarien.

9. Verfahren nach Anspruch 1 für die Optimierung von Chiralabtrennungen bei der Kapillarelektrophorese.

## Revendications

1. Procédé de séparation et d'identification de fragments d'ADN génomique dans les méthodologies électrophorétiques en gel plat ou en capillaires, **caractérisé par** l'utilisation d'un gradient de porosité couplé à un gradient de concentration d'un dénaturant chimique, ou couplé à un gradient de dénaturant thermique.

2. Procédé selon la revendication 1, réalisé sur des gels de criblage plats choisis dans le groupe formé par les polyacrylamides, des agaroses modifiées, les celluloses, les dérivés de la cellulose et les mélanges physiques ou les polymères réticulés correspondants.

3. Procédé selon les revendications 1 et 2, **caractérisé en ce que** le gradient de porosité est constitué de solutions visqueuses de polymères linéaires ou ramifiés.

4. Procédé selon les revendications 1 à 3, **caractérisé en ce que** le gradient de porosité est formé par des polyacrylamides résistants à l'hydrolyse, soit sous forme d'homopolymères, soit sous forme de copolymères de différents monomères.

5. Procédé selon la revendication 4, **caractérisé en ce que** les polyacrylamides sont choisis dans le groupe formé par le poly(N,N-diméthylacrylamide), le poly(N-acryloylaminoéthoxyéthanol), le poly(N-acryloylaminopropanol), le poly(N-acryloylaminobutanol) et les copolymères correspondants et leurs mélanges.

6. Procédé selon la revendication 1, pour la séparation et l'identification de mutations ponctuelles dans l'ADN génomique humain.

7. Procédé selon la revendication 1, pour les séparations électrocinétiques nécessitant des conditions non isocratiques.

8. Procédé selon la revendication 1, pour l'analyse de mutations protéiques, de dissociation en sous-unités, de transitions conformationnelles, à la fois en format de gel plat et en capillaires.

9. Procédé selon la revendication 1, pour l'optimisation des séparations chirales en électrophorèse capillaire.
